# EUROPEAN PATENT APPLICATION

(11) **EP 1 785 041 A1**
(43) Date of publication of application: **16.05.2007**
(21) Application number: 06123653.5
(22) Date of filing: 08.11.2006
(51) Int. Cl.: A23L 1/176, A23L 1/164, A21D 13/00

(54) **Process for the preparation of croûtons**

(30) Priority: 14.11.2005 EP 05077590
(71) Applicant: UNILEVER N.V., 3013 AL Rotterdam (NL); UNILEVER PLC, London EC4P 4BQ (GB)
(72) Inventor: Ralf Clausen, 74074, Heilbronn (DE); Winfried Sailer, 74074, Heilbronn (DE)
(74) Representative: Wurfbain, Gilles L.

(57) **Abstract**

A process for manufacturing dry, quickly rehydrating yet chewy particles, based on carbohydrates containing starch. Such particles may be prepared by making a dough comprising e.g. flour or semolina of rice, corn, or other source, protein, a raising agent, optionally fat or oil, and water, subjecting the dough to a first shaping step, heating the shaped dough, subjecting the heated dough to a second shaping step to prepare individual particles, drying the so obtained individual particles to a moisture content of 1-20%. The particles are suitable as chwey soup garnishing and/or as or in rehydratable snack food formulations.

## Description

### Field of the invention

The present invention relates to a rehydratable chewy food particle ingredient and a process to obtain such. The ingredient can be used as a soup garnishing particle and/or as or in a rehydratable chewy snack product.

### Background of the invention

Soup in many parts of the world contains soup garnishing. Such garnishing can be based on a variety of materials, such as carbohydrates, meat, fish, egg, vegetables, herbs, etcetera. A soup garnishing can have e.g. a decorative function, for providing flavour, or providing nutritional benefit (e.g. making the soup "more filling"). Examples of carbohydrate-based garnishing are rice, vermicelli, croutons (usually pieces of dry, roasted bread), optionally with a flavouring ingredient. Examples of meat and fish garnishings are disclosed in EP 490296. Examples of egg-based garnishing is pieces of omelette, pieces of boiled egg, or egg-royale, an example of the latter is described in EP 764406.

EP 764406 discloses a process for preparing egg royale type garnishing, by preparing a premix comprising 25-50% milk powder, 20-50% egg yolk, 4-5.5% dry egg white, 3-25% starch, 0.5-2.5% raising agent, 0.5-3% salt. The premix is agglomerated, sheeted, the sheet treated with steam of 95-105°C, diced, and the dices are dried.

Conventional soup garnishing particles are either soft (such as vermicelli) or crispy (such as croutons). There is a need for soup garnishing particles which have (upon use in soup) a certain "chewiness" (i.e. one can chew on it, but that are not brittle).

There is also a desire for rehydratable particles which can be used as or in rehydratable (preferably instant) snack products, and which particles have (upon use, i.e. directly after rehydration) a certain "chewiness" (i.e. one can chew on it, but that are not brittle). Due to this, the process to make such should enable making such particles (which are chewy directly after rehydration) with a wide variety of sizes, as e.g. for snack products larger sizes are preferred than for soup garnishing.

### Summary of the invention

There is a need for dry (i.e. less than 20% moisture, preferably less than 10% moisture), rehydratable particles which can be used in soup (preferably dry soup formulations), and which, upon rehydration, yield chewy, non-brittle, soup garnishing particles, or which can be used as or in rehydratable (preferably instant) snack products having a certain "chewiness" (i.e. one can chew on it, but that are not brittle) upon use, i.e. directly after rehydration, and which particles can be made having such properties in a wide variety of sizes.

It has now been found that such may be achieved by a process for the preparation of dry soup ingredient particles, the process involving the steps of:
(a) preparing a dough comprising (based on dry weight) 50-90% of a carbohydrate source comprising starch, 5-20% of a protein source, 0.5-7% of a raising agent, 0-15% fat or oil, and (based on the dough formulation) 25-45 % aqueous liquid,
(b) subjecting the dough to a first shaping step, whereby the thickness in one dimension of the shaped dough is between 2 and 20 mm,
(c) steaming the shaped dough as obtained under step (b) for 1-30 minutes, at a temperature of 95-200°C, and at least 90% moisture,
(d) subjecting the steamed dough to a second shaping step to prepare individual particles,
(e) drying the so obtained individual particles to a moisture content of 1-20% (preferably 10-10%).

### Detailed description of the invention

In the process according to the invention the dough is preferably prepared (step (a)) by first mixing all ingredients except for the aqueous liquid, and then (optionally after a resting period of 1 or more days at a temperature below 25°C) the aqueous liquid is mixed in. More preferred is a process in which first all particulate ingredients are mixed, then the fat or oil is added, followed by adding the aqueous liquid (optionally preceded again by a resting period). The first resting period can be desired when using fat, which can presumably then recrystallise.

In the process according to the invention, the first shaping step (step (b) can be performed by sheeting, extrusion, or pressing through a die. This will yield a slab of dough or a string of extruded dough. Such slab or string is then heated, which heating (further) activates the raising agent and also gelatinises the starch of the carbohydrate source as well as that it denatures/coagulates the protein. The second shaping step may be performed by cutting or stamping. Depending upon the position of the cutting equipment dices can be obtained of varying shape, e.g. cubes of a slab of dough or square extrudate is cut, or e.g. more like a pill or (thick) coin shape when a circular extrudate is cut.

In the steaming step (step (c)), due to the raising agent being activated and moisture developing in gas, the thickness of the sheeted or extruded slab or die pressed material increases, and the material will become of a sponge-like porous structure. Before step (d), the sides of the sponge are to a large extent closed, i.e. the surface of the heated slab, extrudate or string will not show many open pores, but to a large extent a closed side. The pores are in the inside. Upon cutting or stamping such slab, extrudate or string into particles (step (d)), the cut or stamped sides will to a large extent show open pores. Depending upon the thickness and dimensions of the cut particles, 15-85% of the outer surface of the particulate the pores are open to the outside, and 85-15% of the outer surface the pores are not open to the outside. The ratio between porous and closed surface can to some extent determine chewiness or texture. It was found that the particles according to the invention are rehydratable, yet remain chewy for quite some time.

In the process according to the invention, the first shaping treatment can suitably be carried out by sheeting between two rollers. The steaming step (c) means subjecting the material to hot moist air (preferably comprising steam) of temperature of 95-200°C and having a moisture content of at least 90% (volume/volume). The steaming step (c) is preferably carried out at a temperature of 95-150°C.

The drying can be carried out by drying techniques as known in the art, e.g. by (hot) air drying.

In the process according to the invention, the carbohydrate source will contain at least 20%, preferably at least 60% of a starchy material, e.g. starch. Suitable carbohydrate sources comprise material obtained from rice, corn, tapioca, wheat, peas, (soy)beans. Such material may be in the form of flour or semolina.

As part of the ingredients in the process according to the present invention a raising agent is present. Preferred raising agents comprises an acid or salt thereof and a carbonate. Preferred acids in this respect comprise acid sodium pyrophosphate (E450), gluconic acid-delta-lacton (E575), acidic sodium citrate (E331), and citric acid (E330). Preferred carbonates comprise sodiumbicarbonate (E500), potassium carbonate (E501), ammonium hydrogen carbonate (E503). Preferred raising agents are e.g. the combinations E331/E500, E450/E500, and E575/E500. The protein used is preferably chicken egg white. The dough can furthermore comprise 0.05-0.5% of a gum, such as guar gum, xanthan, alginate, locust bean gum, or combinations thereof.

Using the process according to the invention after the first shaping produces a product (stab, extrudate, string) with a thickness of of 2-20 mm, which thickness increases upon steaming, remains the same after cutting, decreases slightly upon drying, and typically increases to more than 2-20 mm upon rehydration.

The invention further relates to the products obtained by the above process. Thus, the invention further relates to a rehydratable particulate having a size between 2x2x2 mm and 3x3x3 cm, which ingredient has a moisture content of 1-20%, which comprises (based on dry weight %) 50-90% of a carbohydrate source, 5-15% protein, 0-15% fat or oil, which particulate has a porous structure, and wherein at 15-85% of the outer surface of the particulate the pores are open to the outside, and at 85-15% of the outer surface the pores are not open to the outside. In such particles, the carbohydrate source preferably comprises material obtained from rice, corn, tapioca, wheat, peas, (soy)beans. The particles can have cube or brick shapes, but also any other suitable shape. Preferably, the (apparent) volume (i.e. regardless of the pores, but just the outside shape) of the particles when dry (i.e. 1-20% moisture) is 10-10000 mm³, more preferably 20-8000 mm³.

The invention further relates to dry (less than 20% moisture, preferably less than 10% moisture) soup formulations (preferably instant soup formulations) which comprise 2-30% (wt%, based on the total dry soup formulation) of the particles according to this invention and/or the particles obtained by the process according to this invention.

The invention further relates to dry (less than 20% moisture, preferably less than 10% moisture) rehydratable snack food formulations which comprise 60-100% (% by weight based on the total dry rehydratable snack food formulation) of the particles according to this invention and/or the particles obtained by the process according to this invention.

### EXAMPLES

### Example 1

The raw materials of table 1 except for the fat were mixed, whereafter the fat is added and further mixed. After a resting time of one day, water is added to the mixture (71 % dry dough + 29% water) and mixed, and the dough is subsequently rolled between a pair of rollers (distance 6 mm). The so-obtained slab of dough is directly subjected to steaming (100°C for 6 minutes), and diced. The so-obtained dices had a size of about 9 mm (more or less cube-shaped). These wet dices were then air dried by subjecting to air at a temperature of 80°C (to a moisture content of about 5%).

The resulting dice (approximately cube-shape) had a size of approx. 8 mm. The 4 sides of the dices that were obtained after cutting after steaming showed an open porous structure. The 2 sides of the dices that were formed by rolling between rollers (before steaming) showed a closed surface (no open cells visible from the outside). The dice had an overall porous structure (except for the closed 2 sides obtained after rolling between the rollers).

**Table 1: ingredients of dry dough premix**

| | Weight % |
|---|---|
| Rice flour | 62 % |
| Tapioca starch | 7 % |
| Dry egg white protein | 10 % |
| Raising agent* | 4% |
| Salt | 3% |
| MSG | 2 % |
| Fat | 12% |

| | |
|---|---|
| * combination of E500 and E331: sodium bicarbonate with monosodium citrate | |

The resulting particles were used in a conventional dry soup formulation (bouillon type). After 2 minutes of rehydration in hot water this resulted in a bouillon with chewy soup garnishing particles.

### Example 2

The process for making the dough of example 1 was repeated for the recipe of table 2.

**Table 2: ingredients of dry dough premix**

| | Weight % |
|---|---|
| Rice flour | 58% |
| Tapioca starch | 6 % |
| Dry egg white protein | 10 % |
| Raising agent* | 5% |
| Flavours and colourings | 1 % |
| Egg yolk | 1.6 % |
| Guar gum | 0.2 % |
| Xanthan gum | 0.2 % |
| Salt | 3% |
| MSG | 2 % |
| Oil | 13 % |

| | |
|---|---|
| * combination of E500 and E331: sodium bicarbonate with monosodium citrate | |

The amount of water added to the dry dough was 36% of the final dough (64% dry dough mixture as table 2). The dough was pressed through a die using a sausage press, die diameter 7 mm. After steaming (100°C / 6 minutes) said diameter was 9.5 mm. This sausage was subsequently cut in strands of 5 mm length, and air dried to a moisture content of about 5%.
Upon rehydration in hot water for 3 minutes chewy particles were obtained.

### Example 3

The process of example 2 was repeated, but instead of having 58% rice flour it contained 37% rice flour plus 21 % soy flakes.
Upon rehydration in hot water for 3 minutes chewy particles were obtained that had a meat-like texture.

## Claims

1. Process for the preparation of dry soup ingredient particles, the process involving the steps of:
(a) preparing a dough comprising (based on dry weight) 50-90% of a carbohydrate source comprising starch, 5-20% of a protein source, 0.5-7% of a raising agent, 0-15% fat or oil, and (based on the dough formulation) 25-45 % aqueous liquid,
(b) subjecting the dough to a first shaping step, whereby the thickness in one dimension of the shaped dough is between 2 and 20 mm,
(c) steaming the shaped dough as obtained under step (b) for 1-30 minutes, at a temperature of 95-200°C and at least 90% moisture,
(d) subjecting the steamed dough to a second shaping step to prepare individual particles,
(e) drying the so obtained individual particles to a moisture content of 1-20% (preferably 10-10%).

2. Process according to claim 1, wherein the first shaping step comprises sheeting, extrusion, or pressing through a die.

3. Process according to claim 2, wherein the first shaping treatment comprises sheeting between two rollers.

4. Process according to claim 1-3, wherein the second shaping step comprises cutting or stamping.

5. Process according to claim 1-4, wherein the steaming step is carried out at a temperature of 95-150°C.

6. Process according to claim 1-5, wherein carbohydrate source comprises material obtained from rice, corn, tapioca, wheat, peas, (soy)beans.

7. Process according to claim 1-6, wherein the carbohydrate source comprises flour or semolina.

8. Process according to claim 1-7, wherein the raising agent comprises an acid or salt thereof and a carbonate.

9. Rehydratable particulate having a size between 2x2x2 mm and 3x3x3 cm, which ingredient has a moisture content of 1-20%, which comprises (based on dry weight %) 50-90% of a carbohydrate source, 5-20% protein, 0-15% fat or oil, which particulate has a porous structure, and wherein 15-85% of the outer surface of the particulate the pores are open to the outside, and 85-15% of the outer surface the pores are not open to the outside.

10. Rehydratable particulate according to claim 9, wherein the carbohydrate source comprises material obtained from rice, corn, tapioca, wheat, peas, (soy)beans.

11. Dry (less than 20% moisture, preferably less than 10% moisture) soup formulations which comprise 2-30% (wt%, based on the total dry soup formulation) of the particles according to claim 9 or 10, or obtained according to claim 1-8.

12. Dry (less than 20% moisture, preferably less than 10% moisture) rehydratable snack food formulations which comprise 60-100% (wt%, based on the total dry rehydratable snackfood formulation) of the particles according to claim 9 or 10, or obtained according to claim 1-8.
